(19) Europäisches Patentamt / European Patent Office / Office européen des brevets

(11) **EP 3 992 045 B1**

(12) **EUROPEAN PATENT SPECIFICATION**

(45) Date of publication and mention of the grant of the patent:
**21.02.2024 Bulletin 2024/08**

(21) Application number: **20204142.2**

(22) Date of filing: **27.10.2020**

(51) International Patent Classification (IPC):
**G06N 20/20** (2019.01)   **B60W 30/02** (2012.01)
**B60W 30/14** (2006.01)   **B60W 50/00** (2006.01)

(52) Cooperative Patent Classification (CPC):
**G06N 20/20; B60W 30/025; B60W 30/143; B60W 50/0097;** G06N 3/044; G06N 3/045

(54) **METHOD AND SYSTEM FOR DETERMINING A CALCULATION MODEL OF A PHYSICAL QUANTITY REPRESENTATIVE OF A STATE OF A VEHICLE IN OPERATION**

VERFAHREN UND SYSTEM ZUR BESTIMMUNG EINES BERECHNUNGSMODELLS EINER PHYSIKALISCHEN MENGE, DIE FÜR EINEN STATUS EINES IN BETRIEB BEFINDLICHEN FAHRZEUGS REPRÄSENTATIV IST

PROCÉDÉ ET SYSTÈME DE DÉTERMINATION D'UN MODÈLE DE CALCUL D'UNE QUANTITÉ PHYSIQUE REPRÉSENTATIVE D'UN ÉTAT D'UN VÉHICULE DANS UNE OPÉRATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.05.2022 Bulletin 2022/18**

(73) Proprietor: **TOYOTA JIDOSHA KABUSHIKI KAISHA**
**Toyota-shi, Aichi-ken, 471-8571 (JP)**

(72) Inventors:
• **KAWAKAMI, Yukito**
  **1140 Brussels (BE)**
• **SMITH, Dominic**
  **1140 Brussels (BE)**
• **FORSMAN, Daniel**
  **1140 Brussels (BE)**

(74) Representative: **Cabinet Beau de Loménie**
  **158, rue de l'Université**
  **75340 Paris Cedex 07 (FR)**

(56) References cited:
**WO-A1-2019/206032     GB-A- 2 569 750**

• **ARZOO MIGLANI ET AL: "Deep learning models for traffic flow prediction in autonomous vehicles: A review, solutions, and challenges", VEHICULAR COMMUNICATIONS, vol. 20, 31 December 2019 (2019-12-31), page 100184, XP055686900, ISSN: 2214-2096, DOI: 10.1016/j.vehcom.2019.100184**

## Description

Field of the disclosure

The present invention relates to the general field of transport by motor vehicle. It relates more particularly to a method for determining a calculation model of a physical quantity representative of a state of the vehicle in operation and from which it is possible to determine a comfort index within said vehicle. An embodiment of the invention also relates to a method of controlling the operation of a motor vehicle by means of said calculation model. The invention finds a particularly advantageous, although not limiting, application in the case of an autonomous or semi-autonomous car.

Description of the Related Art

The field of autonomous or semi-autonomous vehicles is currently undergoing significant development. As a result, more and more material, electronic and computer resources are required to enable such vehicles to operate properly.

In a conventional way, a motor vehicle (e.g. combustion motor or electrical motor) of this type comprises one or more control units, referred to as "ECU" (acronym of the expression "Electronic Control Unit"). Each of these units is a type of electronic control unit that controls inter alia one or more actuators of the vehicle to ensure optimal engine performance. The control of these actuators is implemented in a manner known per se for each control unit by means of a closed control loop.

By way of example, one knows a control unit intended to increase car safety and more generally road safety, and referred to as "ADAS" (acronym of the expression "Advanced Driver Assistance System"). The ADAS control unit can be seen as the most important control unit for the implementation of proper vehicle operation, as it allows avoiding collisions and accidents by alerting the driver to potential problems, or avoiding collisions by implementing safeguards and taking over control of the vehicle. To implement these multiple applications, data from plural sensors, cameras, radars, lidars etc. are collected such that commands may be generated using these data and sent to plural actuators, engine, brake, steering etc.

More specifically, the ADAS control unit can implement functionalities to ensure precise control of vehicle speed. One example of these functionalities are classically referred to as "ACC" system (acronym of the expression "Adaptive Cruise Control") and allow detection of other vehicles in front of the equipped vehicle as well as distance regulation with the relevant targets by adjusting speed.

The ADAS control unit can also be combined with other control units, e.g. a control unit in charge of operating an active suspension system.

In addition to contributing to driving safety, the functionalities implemented by the various control units equipping the vehicle, particularly those supported by the ACC and active suspension systems, contribute to the comfort felt by the vehicle's occupants too.

Thus, the comfort of the occupants is highly dependent on the material, electronic and computer means useful for the operation of these control units. In particular, a large number of sensors are required to measure all the data and signals from which commands can be generated and transmitted to the actuators. As a result, current solutions for ensuring sufficient comfort for vehicle occupants are complex to implement and very expensive.

The prior art also comprises the patent applications WO 2019/206032 A1 and GB 2569750 A, as well as the scientific article "Deep learning models for traffic flow prediction in autonomous vehicles: A review, solutions and challenges" (Arzoo Miglani et al, VEHICULAR COMMUNICATIONS, vol.20, 2019-12-31).

Summary of the disclosure

The purpose of the present invention is to overcome all or some of the limitations of the prior art solutions, particularly those outlined here above, by providing a solution that enables comfort within a motor vehicle to be controlled in a simpler and less costly manner than the solutions of the prior art.

To this end, and according to a first aspect, the invention relates to a method for determining, for a motor vehicle of a predefined type, a calculation model of a physical quantity Q representative of a state of the vehicle in operation, and determining a comfort index within said vehicle in operation being determinable based on at least the quantity Q predicted by said calculation model. Said determination method is performed by a processing system comprising acquisition means and a processing device, and comprises the steps of:

- acquiring, by the acquisition means and on a motor test vehicle in operation corresponding to said predefined type, signals including a measurement signal of said quantity Q and other signals of physical quantities representative of a state of the vehicle in operation and distinct from Q,
- obtaining, by the processing device, said acquired signals,
- learning in a supervised manner, by the processing device and based on the acquired signals, a calculation model of the quantity Q, the physical quantities respectively associated with said other signals being considered as explanatory variables of said calculation model.

said method being characterized in that said supervised learning step comprises:

- a stationary wavelet transform of each of said other signals such that each of said other signals is decomposed into a plurality of frequency signals,

- the performing of a gradient boosting regression algorithm based on said frequency signals and said measurement signal.

By way of an example, "other signals" can refer in a conventional way to signals provided by a network of control units, also known as a CAN network (acronym of the expression "Controller Area Network"), equipping the motor vehicle. However, the invention is not limited to the consideration of these CAN signals as said "other signals". Indeed, it is also possible to take into account, possibly in combination with CAN signals, signals provided by sensors fitted to the vehicle and which are not broadcast on the CAN network.

The determination method according to the invention therefore proposes to determine a calculation model of said quantity Q with the aid of supervised learning, and on a motor test vehicle.

Obtaining such a calculation model offers the possibility, when this calculation model is operated on a commercial motor vehicle, of avoiding the use of sensors dedicated to the measurement of said physical quantity Q.

This has the advantage of considerably reducing manufacturing costs, but also greatly simplifies the possibility of determining a comfort index within the vehicle in operation.

Indeed, it is no longer necessary to acquire and process signals that would come from sensors dedicated to the measurement of the physical quantity Q. Moreover, thanks to said calculation model, a precise evaluation of said physical quantity can be available in real time in the near future.

The use of stationary wavelet transforms of said other signals (e.g. CAN network signals) with a gradient boosting regression algorithm is particularly advantageous as it allows the benefits of each of these aspects to be exploited. More specifically, the gradient boosting algorithm is a very general regression model that adapts to arbitrarily high-dimensional data without assumptions about the data and that is implemented iteratively so as to reduce the regression error at each iteration.

Another advantage of the gradient boosting regression algorithm is that it classically outputs a metric representative of the significance (i.e. influence) of a signal among said other signals in the predicted physical quantity Q.

As for the stationary wavelet transform of a signal, it enables to take into account the transient nature of this signal. To this effect, the stationary wavelet transform allows a predetermined number of frequency signals to be generated from a given signal in a manner known per se.

According to an embodiment, the supervised learning step comprises a determination of local extrema of said measurement signal whose respective values are greater, in absolute value, than a given threshold, the calculation model being learned based on said values and on said other signals.

Thus, in this embodiment, only said local extrema are retained for the implementation of the gradient boosting regression algorithm. This way of proceeding is particularly advantageous because it allows only the useful information contained in the measurement signal associated with the physical quantity Q to be taken into account.

Moreover, in this embodiment, restricting the number of values to be considered for the regression has the side benefit of significantly reducing the training set required for the implementation of said regression, so that model fitting can be performed much faster.

According to an embodiment, the physical quantity Q is a vertical acceleration or a longitudinal acceleration of the vehicle in operation.

According to an embodiment of the first aspect there is a method for controlling the operation of a motor vehicle, said method comprising a step of obtaining at least one calculation model previously determined for said vehicle according to the invention. Said control method also comprises, when the vehicle is in operation, a step of performing a control loop for regulating comfort within said vehicle, and comprising:

- a determination, by means of said at least one calculation model and for at least one instant of time, of a value of the physical quantity Q associated with said at least one calculation model,
- a determination of an index of comfort within said vehicle based on said at least one value,
- an evaluation of a criterion of comfort within said vehicle, said criterion of comfort consisting in verifying whether the comfort index is within a given range, and, if said comfort criterion is not met,
- an automatic speed adjustment of the vehicle or an automatic modification of at least one parameter of an active suspension system equipping the vehicle, so that the comfort criterion is met.

The control method according to this embodiment inherits the advantages presented above for the determination method, in particular the advantages of obtaining and using a calculation model in a motor vehicle.

In particular embodiments, the control method may furthermore include one or more of the following features, taken alone or in any technically feasible combination.

According to an embodiment, a plurality of values of the quantity Q are determined so as to form a signal referred to as "calculated signal", and the determination of the comfort index comprises:

- a determination of the root mean square value of said calculated signal, and/or

- a determination of the number of local extrema of said calculated signal whose respective values are greater, in absolute value, than a given threshold.

According to an embodiment, the step of performing the control regulation loop also comprises, when the comfort criterion is met for a given period, an automatic speed increase of the vehicle or another automatic modification of at least one parameter of the active suspension system so that the comfort criterion remains satisfied after said increase or said other modification.

Such features are advantageous to return to the general target speed of the car when road conditions are less severe. In other words, if at the end of said given period it is found that the comfort index remains within said range, this means that the road conditions, which initially could have led to a modification of speed, have now improved.

According to an embodiment, two calculation models are considered, a first model predicting a vertical acceleration of the vehicle, and a second model predicting a longitudinal acceleration of the vehicle.

According to a second aspect, the invention also relates to a computer program including instructions for executing the steps of obtaining and supervised learning of a determination method according to the invention when said program is executed by a computer.

This program can use any programming language and take the form of source code, object code or a code intermediate between source code and object code, such as a partially compiled form, or any other desirable form.

According to an embodiment of the second aspect, there is a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a third aspect, the invention also relates to a processing system for determining, for a motor vehicle of a predefined type, a calculation model of a physical quantity Q representative of a state of the vehicle in operation, and determining a comfort index within said vehicle in operation being determinable based on at least the quantity Q predicted by said calculation model. Said processing system comprises:

- acquisition means configured to acquire, on a motor test vehicle in operation corresponding to said predefined type, signals including a measurement signal of said quantity Q and other signals of physical quantities representative of a state of the vehicle in operation and distinct from Q,
- a processing device comprising:

  • an obtaining module configured to obtain said acquired signals,
  • a learning module configure to learn in a supervised manner, based on the acquired signals, a calculation model of the quantity Q for which the physical quantities respectively associated with said other signals are considered as explanatory variables.

said processing system being characterized in that the supervised learning comprises:

- a stationary wavelet transform of each of said other signals such that each of said other signals is decomposed into a plurality of frequency signals,
- the performing of a gradient boosting regression algorithm based on said frequency signals and said measurement signal.

According to an embodiment of the third aspect, there is a processing system for controlling the operation of a motor vehicle, said processing system comprising an obtaining module configured to obtain at least one calculation model previously determined for said vehicle according to the invention. Said processing system also comprises a control loop for regulating comfort within said vehicle when the vehicle is in operation, said control loop comprising:

- a first determination module configured to determine, by means of said at least one calculation model and over a given time horizon, a signal, referred to as "predicted signal", representative of the physical quantity Q associated with said at least one calculation model,
- a second determination module configured to determine an index of comfort within said vehicle based on said predicted signal,
- an evaluation module configured to evaluate a criterion of comfort within said vehicle, said criterion of comfort consisting in verifying whether the comfort index is within a given range,
- a control module configured to automatically adjust the speed of the vehicle or a control module configured to automatically modify at least one parameter of an active suspension system equipping the vehicle if said comfort criterion is not met, so that the comfort criterion is met.

According to an embodiment of the third aspect, there is a motor vehicle comprising a processing system according to the invention.

Brief description of the drawings

How the present disclosure may be put into effect will now be described by way of example with reference to the appended drawings, in which:

- figure 1 illustrates, in its environment, a particular embodiment of a processing system configured to determine a calculation model of a physical quantity Q for a motor vehicle of a predefined type,
- figure 2 illustrates an example of the hardware architecture of a processing device belonging to the processing system of figure 1 and being configured to implement steps of a determination method according to the invention,
- figure 3 is a flowchart of a particular embodiment, carried out by the processing system of figure 1, of the determination method according to the invention,
- figure 4 illustrates, in its environment, a particular embodiment of a processing system configured to control the operation of a vehicle,
- figure 5 illustrates an example of the hardware architecture of the processing system of figure 4, and
- figure 6 is a flowchart of a particular embodiment, carried out by the processing system of figure 4, of a control method according to the invention.

Description of the embodiments

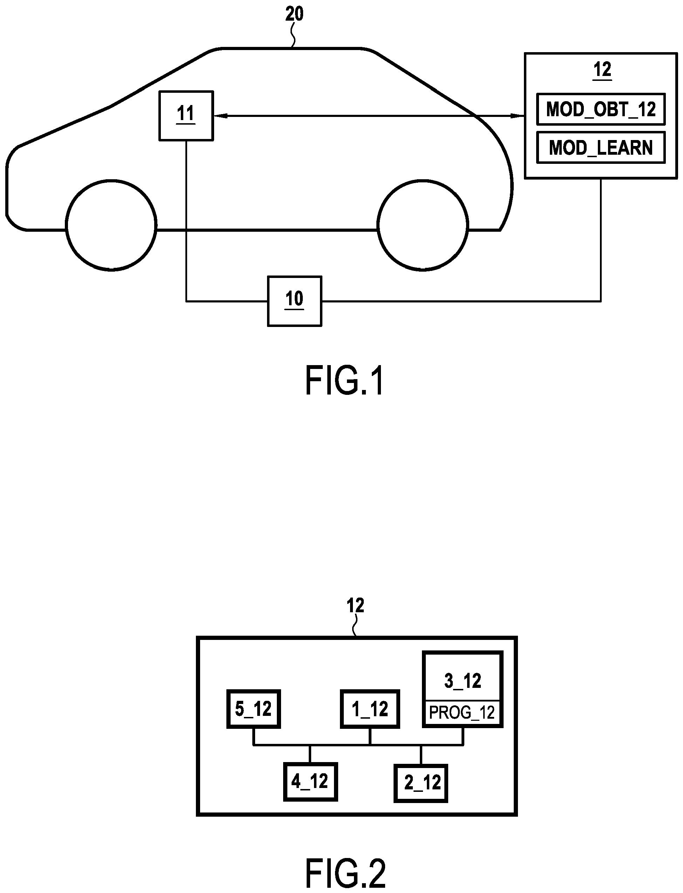

Figure 1 illustrates, in its environment, a particular embodiment of a processing system 10 configured to determine a calculation model of a physical quantity Q for a motor vehicle 20 of a predefined type.

For the rest of the description, said processing system 10 is referred to as "first processing system 10".

By "motor vehicle of predefined type", one refers here to a motor vehicle developed and built according to predetermined technical specifications, for example technical specifications designed by an engine manufacturer, with the aim of mass production.

The following description is more specifically aimed at a car 20. However, it should be noted that no limitation is attached to the type of motor vehicle that may be considered, such as a truck, a bus, etc., as long as this vehicle is able to move on the ground. Moreover, said motor vehicle can also be an autonomous or semi-autonomous vehicle.

For the rest of the description, it is also considered that said car 20 has a general configuration in accordance with the state of the art. To this end, said car 20 comprises a plurality of control units, as for example an ADAS type control unit as well as a control unit in charge of operating an active suspension system.

More generally, these control units belong to a network (i.e. set) of control units, also known as a CAN network (acronym of the expression "Controller Area Network"), equipping car 20. In a manner known per se, these control units are configured to communicate with each other by means of a CAN bus, and are further configured to provide signals of physical quantities representative of a state of the vehicle in operation (referred to as CAN network signals). Such signals are conventionally obtained by means of dedicated sensors placed at different locations in the car 20 in order to measure the physical quantities respectively associated with these signals. Of course, the data measured by said sensors can be processed to obtain CAN signals.

By way of example, signals provided by the CAN network refer to physical quantities that are included in the following list:

- rear right/rear left/front right/front left wheel speed,
- steering angle,
- engine torque,
- pressure in brake master cylinder,
- inclination of the car due to the slope of the road,
- etc.

No limitation is attached to the number of signals that can be provided by the CAN network, e.g. equal to 26. More generally, the man skilled in the art is familiar with the signals that can be provided by a CAN network. He also knows the sensors that must be used, and will therefore be able to choose suitable sensors for each of the quantities considered, for example in the catalogues of products offered by specialist manufacturers. The man skilled in the art also knows the respective locations of said sensors in car 20 and how to read them, in order to obtain desired signals. Therefore, these aspects are not discussed further here.

The physical quantity Q, as for it, corresponds to a physical quantity which is distinct of all the physical quantities respectively associated to the CAN network, and from which it is possible to determine a comfort index in car 20 in operation. For example, the physical quantity Q is a vertical acceleration of the car 20. Thus, a vertical acceleration signal can be obtained from sensors positioned close to the seats in car 20, preferably the front seats. It should be noted, however, that there are no limitations attached to the location of the sensor(s) from which a vertical acceleration signal can be obtained.

Moreover, nothing excludes considering a physical quantity Q different from a vertical acceleration, such as a longitudinal acceleration. In general, no limitation is attached on the nature of the physical quantity Q that can be considered, as long as it is representative of the state of the vehicle in operation. Thus, the physical quantity Q may characterize the movement of the vehicle and correspond to a displacement, speed, force, etc.

It should also be noted that the comfort index can be determined from one or more physical quantities, such as vertical and/or longitudinal acceleration. Aspects related to the nature of this comfort index, and how the latter is precisely determined, are described in more detail hereafter.

According to the invention, the first processing system 10 comprises acquisition means 11 configured to acquire, on a test car in operation corresponding to said predefined type, a measurement signal of said quantity Q as well as other signals.

In the present embodiment, it is considered that said "other signals" are provided by the CAN network. However, the invention is not limited to the consideration of these CAN signals as said "other signals". Indeed, it is also possible to take into account, possibly in combination with CAN signals, signals provided by sensors fitted to the vehicle and which are not broadcast on the CAN network. For example, a longitudinal acceleration signal may be already measured in the vehicle without being broadcasted on the CAN network.

By "test car", one refers here to a car in road operation (i.e. in motion) specifically used for measurement purpose and conforming to the type intended to be produced in series.

It should be noted that the acquisition of signals from a test car 20 allows a database to be built up which is then used to determine said calculation model, as detailed hereafter.

In a conventional way, said acquisition means 11 integrate, inter alia and in the form of an acquisition chain, said CAN network as well as the various sensors respectively dedicated to the physical quantities to be acquired. Said acquisition chain also includes, for example, an acquisition card configured to condition the signals provided by the sensors. The conditioning implemented by the acquisition card includes for example an amplification and/or a filtering and/or a current-to-physical quantity conversion. Said acquisition means 11 also include, at the output of the acquisition chain, an analog/digital converter configured to digitize the conditioned signals.

It should be noted that no limitation is attached to the frequency at which a signal is sampled. For example, the sampling frequency of a measurement signal is at least equal to 100 Hz, preferably comprised between 100 Hz and 125 Hz.

In a general manner, the configuration of such acquisition means 11 is well known to the man skilled in the art, and is therefore not detailed here further.

The first processing system 10 also comprises a processing device 12 configured to carry out, for predefined type of car 20 and on the basis of the acquired signals (signal measuring the quantity Q and the other signals provided by the CAN network), processes aimed at determining said calculation model, by implementing some of the steps of a method for determining said calculation model.

The purpose of this calculation model is to replace, in a car of said predefined type, the sensors which are used in the solutions of the prior art to provide a measurement signal of the physical quantity Q. In other words, this calculation model, when determined according to said determination method and implemented in a car of said predefined type, not only simplifies but also reduces the cost of obtaining said measurement signal.

In the present embodiment, and as shown in Figure 1, the processing device 12 is located outside of (i.e. remotely from) the test vehicle 20. However, nothing excludes the possibility that said processing device 12 may be located in the test vehicle 20, i.e. it is integrated into the hardware and electronic architecture of said test vehicle 20.

Figure 2 illustrates an example of the hardware architecture of the processing device 12 for the implementation of steps of the determination method according to the invention.

To this end, the processing device 12 has the hardware architecture of a computer. As shown in Figure 2, the processing device 12 comprises, in particular, a processor 1_12, a random access memory 2_12, a read-only memory 3_12, a non-volatile memory 4_12 and communication means 5_12.

The read-only memory 3_12 of the processing device 12 constitutes a recording medium conforming to the invention, which is readable by processor 1_12 and on which is recorded a computer program PROG_12 conforming to the invention, containing instructions for carrying out steps of the determination method according to the invention. The program PROG_12 defines functional modules of the processing device 12, which are based on or control the aforementioned hardware elements 2_12 to 5_12 of the processing device 12, and which comprise in particular:

- an obtaining module MOD_OBT_12 configured to obtain said acquired signals,
- a learning module MOD_LEARN configure to learn in a supervised manner, based on the acquired signals, a calculation model of the quantity Q for which the physical quantities respectively associated with said other signals are considered as explanatory variables.

Thus, in the hardware architecture example considered here, the obtaining module MOD OBT_12 is configured to obtain the acquired signals. By "obtain the acquired signals", one refers here to the obtaining, for each of the signals acquired, of representative samples of said signals after they have been digitised.

In other words, the obtaining of said acquired signals by the processing device 12 is implemented via a data exchange (transmission/reception) controlled by the obtaining module MOD_OBT_12 and carried out by the communication means 5_12 of said processing device 12 as well as by communication means suitable for transmission equipping the acquisition means 11.

In a general manner, the communication means 5_12 considered for such a data exchange are based on a communication interface. No limitation is attached to the nature of this communication interface, which may be wired or non-wired, and may implement any protocol known to the man skilled in the art (Ethernet, Wifi, Bluetooth, 3G, 4G, 5G, etc.).

Nothing excludes either that the processing device 12 obtains, via its obtaining module MOD_OBT_12, the acquired signals after they have been stored in memory means external to the processing device 12, such as for example a dedicated database.

More generally, there are no limitations on the way in which the acquired signals are obtained by the processing device 12.

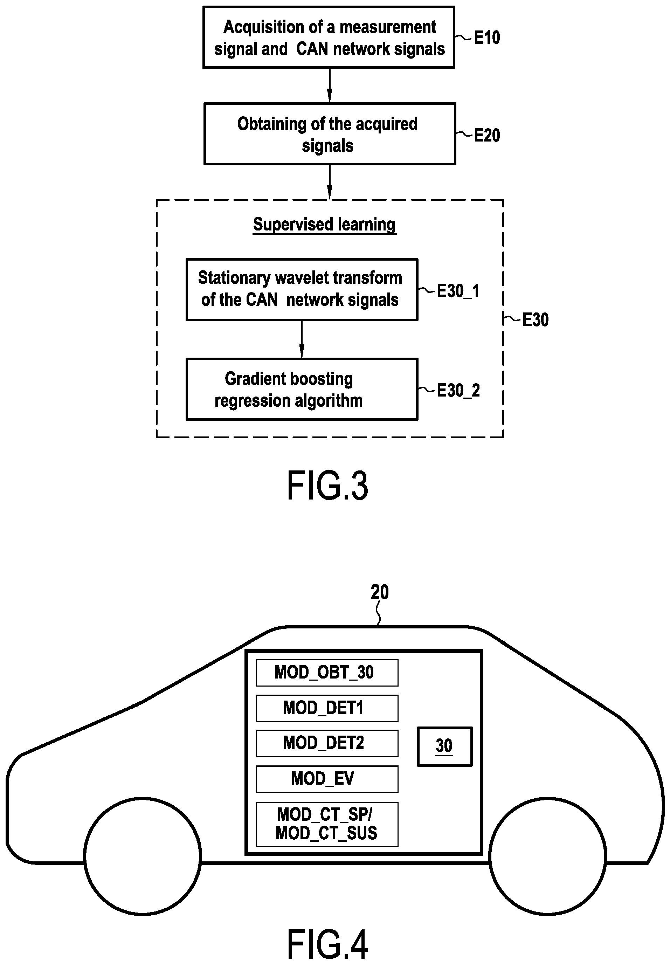

Figure 3 is a flowchart of a particular embodiment, carried out by the first processing system 10, of the determination method according to the invention.

As shown in Figure 3, the determination method of the calculation model comprises a first step E10 of acquisition of signals including the measurement signal of said quantity Q and other signals provided by the CAN network. This acquisition step E10 is performed by the acquisition means 11 of the first processing system 10 on the test car 20.

By way of example, said acquisition step E10 is performed for a predetermined period on various type of road surfaces and with various driving conditions, e.g. 600 seconds, so as to acquire a sufficient volume of samples of the signals, typically several hundred samples for each of the signals. The invention nevertheless remains applicable to any number of samples, and it is of course understood that the accuracy of the calculation model determined through the method is correlated to the number of samples acquired.

Said predetermined period corresponds, for example, to the total period of one session of use of the test car 20 in operation.

In another example, signal acquisition is triggered during one or more specific phases of operation of the test car 20.

Once said signals have been acquired, said determination method comprises a step E20 of obtaining said signals acquired by the processing device 12, more particularly via the obtaining module MOD_OBT_12 thereof.

Once the signals have been obtained by the processing device 12, the determination method comprises a step E30 of learning in a supervised manner, by the processing device 12 and based on the acquired signals, of the calculation model. This learning step E30 is performed by the learning module MOD_LEARN of the processing device 12.

The physical quantities respectively associated with the signals provided by the CAN network are considered as explanatory variables of said calculation model. Accordingly, the calculation model can be seen as a function admitting as arguments said explanatory (i.e. input) variables. Otherwise said, determining the calculation model consists in performing a regression of the explained variable, i.e. here the physical quantity Q, as a function of the explanatory variables respectively associated with the signals provided by the CAN network.

According to the invention, the supervised learning step E30 comprises:

- a stationary wavelet transform (sub-step E30_1) of each of the CAN network signals, such that each of said CAN network signals is decomposed into a plurality of frequency signals,
- the performing (sub-step E30_2) of a gradient boosting regression algorithm based on said frequency signals and said measurement signal.

The use of stationary wavelet transforms of CAN network signals with a gradient boosting regression algorithm is particularly advantageous as it allows the benefits of each of these aspects to be exploited. More specifically, the gradient boosting algorithm is a very general regression model that adapts to arbitrarily high-dimensional data without assumptions about the data and that is implemented iteratively so as to reduce the regression error at each iteration.

Another advantage of the gradient boosting regression algorithm is that its classically outputs a metric representative of the significance (i.e. influence) of a CAN network signal in the predicted physical quantity Q.

As for the stationary wavelet transform of a CAN network signal, it enables to take into account the transient nature of this signal at a known time step (i.e. without keeping the previous and following time steps). To this effect, the stationary wavelet transform allows a predetermined number, e.g. 16, of frequency signals to be generated from a CAN network signal in a manner known per se.

Consequently, stationary wavelet transformed CAN signals allowed the gradient boosting regression algorithm to accurately predict the output times histories in general. The accuracy of such a prediction is, for example, measured by means of an indicator, referred to as "model score " MS, which can be expressed as follows:

$$MS = 1 - STD\,(SQA - SQP)/STD(SQA)$$

where:

- STD refers to the standard deviation,
- SQA refers to the measurement signal of the physical quantity Q,
- SQP refers to the predicted signal of the physical quantity Q.

A calculation model that guesses based only on output mean and standard deviation, not accounting for input, should have a model score of 0. Moreover, a model score strictly smaller than 0 signify a calculation model that is arbitrarily worse than random guesses. On the contrary, a perfect calculation model would have a score of 1.

Inventors have found that the combination of stationary wavelet transforms with gradient boosting regression algorithm caused the model score to reach at least 0,5.

More generally, the man skilled in the art knows how to implement stationary wavelet transforms as well as a gradient boosting regression algorithm. For example, with regard to the gradient boosting regression algorithm, the expert knows how to split the set of acquired signal samples so as to form a training set and a test set and thus carry out a regression.

In a more specific embodiment, the supervised learning step comprises a determination of local extrema (in time) of said measurement signal whose respective values are greater, in absolute value, than a given threshold, the calculation model being learned based on said values and on said other signals.

Thus, in this more specific embodiment, only the signal samples (i.e. time samples) which are positioned, in absolute value, above said threshold are retained for the implementation of the gradient boosting regression algorithm. This way of proceeding is particularly advantageous because it allows only the most useful information contained in the measurement signal associated with the physical quantity Q to be taken into account.

Moreover, in this more specific embodiment, restricting the number of samples to be considered for the regression has the side benefit of significantly reducing the training set, so that model fitting can be performed much faster.

It should be noted that nothing excludes weighting the samples above the threshold by coefficients distinct from the values respectively associated with these samples. In this way, it is possible to increase or decrease the importance given to all or part of the samples when implementing supervised learning. It has to be noted that weighting some points increase the importance of the error for said points. Thus, if the error at a time step is multiplied by the absolute value of the peak at that time, the error on these points will automatically be more considered when trying to minimise the total regression error function.

It should also be noted that the threshold value beyond which samples of the measurement signal are retained or not for supervised learning depends of course on the nature of the physical quantity Q. For example, when the physical quantity Q is a vertical acceleration of the car 20, the threshold is equal to $0.5 m.s^{-2}$.

In a general way, any method of regression known to the man of the art may be implemented however the invention is defined by the combination of stationary wavelet transforms with a gradient boosting regression algorithm.

For example in an non-claimed embodiment, the supervised learning step comprises the performing of a neural network regression algorithm (recurrent or convolution networks can be used), a histogram gradient boosting algorithm, etc.

Moreover, it is important to note that the considerations mentioned above with respect to the possibility of taking into account only part of the samples of the measurement signal (and possibly a weighting of these samples) apply regardless of the regression method considered. Moreover, still other pre-processing of the data like frequency filtering, scaling, normalising could also be applied.

The invention has so far been described in connection with a determination of a calculation model of a physical quantity Q for a car 20. The calculation model thus determined makes it possible to compute the temporal evolution of the physical quantity Q. This is particularly advantageous since it is then possible to determine, at a given frequency and in real time, said physical quantity Q. By "in real time", one refers here to computations that are carried out fast enough so that the time taken to predict a value of Q is small enough compare to a control logic.

When such a calculation model has been determined, it can be used, according to another embodiment of the invention, by a processing system 30 according to the invention and integrated in a car 20 corresponding to said predefined type. It is therefore understood that the car 20 considered here is no longer a test car, but a car intended to be marketed and equipped with said processing system 30.

For the rest of the description, said processing system 30 is referred to as "second processing system 30".

Figure 4 illustrates, in its environment, a particular embodiment of said second processing system 30 according to the invention.

The second processing system 30 is configured to carry out processing for controlling the operation of said car 20, by implementing a method for controlling the operation of said car 20. The control proposed by the invention enables the comfort felt by the occupants during operation to be monitored and thus to be improved compared to a standard vehicle not equipped said second processing system 30.

For the sake of simplicity, and for the rest of the description (unless otherwise stated), it is considered in a non-limitative manner that a unique calculation model of the vertical acceleration has been previously determined by means of the method of determination according to the invention and for the type of car considered above.

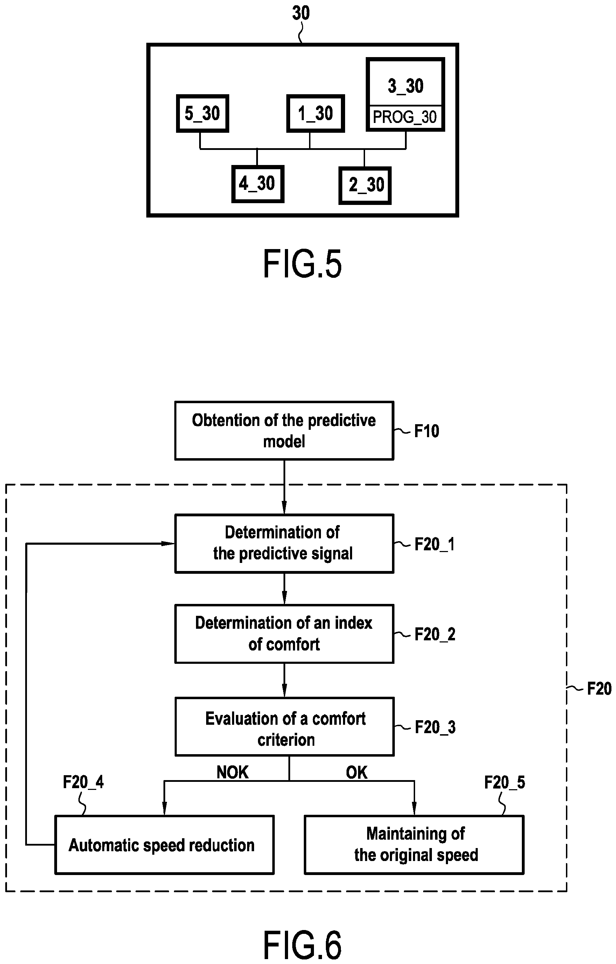

Figure 5 illustrates an example of the hardware architecture of the second processing system 30 for the implementation of the control method according to the invention.

The second processing system 30 has the hardware architecture of a computer. As shown in Figure 5, the second processing system 30 comprises, in particular, a processor 1_30, a random access memory 2_30, a read-only memory 3_30, a non-volatile memory 4_30 and communication means 5_30.

The read-only memory 3_30 of the second processing system 30 constitutes a recording medium conforming to the invention, which is readable by processor 1_30 and on which is recorded a computer program PROG_30 conforming to the invention, containing instructions for carrying out steps of the control method according to the invention. The program PROG_30 defines functional modules of the second processing system 30, which are based on or control the aforementioned hardware elements 2_30 to 5_30 of the second processing system 30, and which comprise in particular:

- an obtaining module MOD_OBT_30 configured to obtain the calculation model previously determined for the car 20,
- a first determination module MOD_DET1 configured to determine, by means of the calculation model and for at least on instant of time, a value of the vertical acceleration of the car 20,
- a second determination module MOD_DET2 configured to determine an index of comfort within said car 20 based on said at least one value,
- an evaluation module MOD_EV configured to evaluate a criterion of comfort within said car 20 for verifying whether the comfort index is within a given range of values,
- a control module MOD_CT_SP configured to automatically adjust the speed of the vehicle or a control module MOD_CT_SUS configured to automatically modify at least one parameter of an active suspension system equipping the car 20 if said comfort criterion is not met, so that the comfort criterion is met.

Thus, in the hardware architecture example considered here, the obtaining module MOD_OBT_30 is configured to obtain the calculation model of the vertical acceleration.

In other words, the obtaining of said calculation model by the second processing system 30 is implemented via a data exchange (transmission/reception) controlled by the obtaining module MOD_OBT_30 and carried out by the communication means 5_30 of said second processing system 30 and the communication means 5_12 of said processing device 12.

In a general manner, the communication means 5_30 considered for such a data exchange are based on a communication interface. No limitation is attached to the nature of this communication interface, which may be wired or non-wired, and may implement any protocol known to the man skilled in the art (Ethernet, Wifi, Bluetooth, 3G, 4G, 5G, etc.).

Nothing excludes either that the second processing system 30 obtains, via its obtaining module MOD_OBT_30, the calculation model after it has been stored in memory means external to the second processing system 30 and the processing device 12, such as for example a dedicated database.

More generally, there are no limitations on the way in which the calculation model is obtained by the second processing system 30.

The first determination module MOD_DET_1, the second determination module MOD_DET_2, the evaluation module MOD_EV and the control module MOD CT_SP/control module MOD_CT_SUS are connected to each other to form a control loop for regulating comfort within the car 20 in operation as described in detail hereafter.

More particularly, in the present embodiment, said control loop is a closed loop, which has the advantage of bringing great stability to the control method according to the invention. However, it should be noted that the control method according to the invention is not limited to the use of a closed loop and can also be implemented using an open loop.

In the architecture example described here, the closed regulation loop comprising said control module MOD_CT_SP (respectively said control module MOD_CT_SUS) is connected with an electronic control unit ECU of type ADAS for controlling the speed, such as an adaptive cruise control(respectively with an ECU of a type known per se for the operation of the active suspension system).

Figure 6 is a flowchart of a particular embodiment, carried out by the second processing system 30, of the control method according to the invention.

As shown in Figure 6, the above-mentioned closed regulation loop is implemented within said control method.

For the sake of simplicity, and for the rest of the description, it is considered in a non-limitative manner that only the control module MOD_CT_SP is used to regulate the operation of car 20, so as to improve comfort.

The control method comprises a first step F10 of obtaining the calculation model of the vertical acceleration which has been previously determined for the car 20. This step F10 is performed by the obtaining module MOD_OBT_30 of the second processing system 30.

Once the calculation model has been obtained, and when the car 20 is in operation, the control method includes a step F20 of performing said closed loop for regulating comfort within the car 20.

This step F20 comprises first a sub-step F20_1 of determining, by means of the calculation model and for at least one instant of time, representative value of the vertical acceleration of the car 20. This sub-step F20_1 is performed by the first determination module MOD_DET1 of the second processing system 30.

As mentioned above, the signals needed by the calculation model to determine the predicted signal are signals provided by the CAN network in car 20. It is therefore understood that this sub-step F20_1 includes an acquisition of said CAN network signals in order to provide these signals as input to the calculation model and thus compute said at least one value.

By way of an example, data of said CAN network signals may be stored during a given period of time, for example during 60 seconds before an instant at which the vertical acceleration is determined by means of the calculation model.

The step F20 also comprises a sub-step F20_2 of determining the index of comfort within the car 20 based on said at least one value. This sub-step F20_2 is performed by the second determination module MOD_DET2 of the second processing system 30.

The step F20 also comprises a sub-step F20_3 of evaluating the criterion of comfort within the car 20, said criterion of comfort consisting in verifying whether the comfort index is within a given range. This sub-step F20_3 is performed by the evaluation module MOD_EV of the second processing system 30.

By way of an example, when a plurality of values of the vertical acceleration are determined so as to form a signal referred to as "calculated signal", the determination of the comfort index comprises a determination of the root mean square value of the calculated signal. According to this example, the comfort index is thus a numerical value considered equal to said root mean square value.

According to another example, the determination of the comfort index comprises a determination of the number of local extrema of said calculated signal whose respective values are greater, in absolute value, than a given threshold, e.g. $0.5$ m.s$^{-2}$. According to this example, the comfort index is thus a numerical value considered equal to said number of local extrema.

Nothing excludes considering other examples for the comfort index as long as it is representative, via observed variations of the calculated signal, of the road condition on which the car 20 is operating.

Furthermore, nothing excludes either considering a comfort index determined as a combination, for example a Boolean combination, of several values as the one described above. It is then understood that in this case, the range referred to for the verification of the comfort criterion may correspond to the combination of a plurality of sub-ranges, each of said sub-ranges being associated with a value of the comfort index obtained according to one of said examples.

Such a range is typically determined during a development phase of the type of car under consideration, and can be adjustable thereafter according to the preferences of the car's occupants.

Afterwards, if the comfort criterion is not met (sign "NOK" on figure 6), the step F20 comprises a sub-step F20_4_SP of automatic speed adjustment (for example reduction of the speed) of the car 20, so that the comfort criterion is met. This sub-step F20_4 is performed by the control module MOD_CT_SP of the second processing system 30, typically by means of an ACC functionality which can be implemented by the control unit ECU which implements the closed regulation loop.

Otherwise said, speed of the car 20 is adjusted to bring back the comfort index within the range for which the comfort criterion is met.

Adjusting the speed of car 20 has an influence on the signals that are provided by the CAN network. Thus, and as shown in Figure 6, once the speed has been adjusted, sub-steps F20_1, F20_2, F20_3 are iterated so as to form said closed regulation loop.

On the contrary, if the comfort criterion is met after sub-step F20_3 (sign "OK" on figure 6), which means that the driving conditions on the road are sufficiently comfortable for the occupants, the step F20 comprises in a conventional way a sub-step F20_5 of maintaining the original speed.

In a more specific embodiment (not shown on the figures), the step F20 of performing the closed regulation loop also comprises, when the comfort criterion is met for a given period of time, e.g. 60 seconds, an automatic speed increase of the vehicle, so that the comfort criterion remains satisfied after said increase.

Such an increase makes it possible to return to an original target speed or even to go faster. It may be implemented with a similar control logic so that the increase is carried out smoothly.

Such features are advantageous for increasing the speed of the car when road conditions are less severe. In other words, if at the end of said given period it is found that the comfort index remains within said range, this means that the road conditions, which initially could have led to a reduction in speed, have now improved.

Nothing also excludes considering other embodiments in which the speed of car 20 is increased via the closed regulation loop following a reduction in speed. For example, it may be envisaged the case where the speed reached after reduction causes the excitation of resonance modes of car 20, for example if the road has a regular undulation (also called wave or corrugated roads). Therefore, the closed regulation loop can be configured to receive information on the detection of such resonance modes and thus allow the speed of car 20 to be increased.

The control method has been described so far considering that only the control module MOD_CT_SP was used to regulate the operation of car 20 in order to improve comfort. However, the invention is not limited to these considerations, and remains applicable in the case where the control module MOD_CT_SUS is used to regulate the operation of car 20 so as to improve comfort. To this end, step F20 for implementing the closed regulation loop may comprise, as an alternative to step F20_4_SP described above, a step F20_4_SUS in which an automatic modification of at least one parameter of the active suspension system equipping the car 20 is performed, so that the comfort criterion is met. The man skilled in the art knows the parameters that can define such an active suspension system (e.g. stabiliser bar stiffness, pneumatic string stiffness, shock absorber valve characteristics, etc.).

The above technical considerations regarding the possibility of increasing the speed of the car 20 after a decrease in speed also apply, of course, when the comfort control is carried out with the control module MOD_CT_SUS.

Furthermore, the invention has also been described so far by considering that the control of the operation of car 20 was carried out on the basis of a unique previously determined calculation model, in this case a calculation model of the vertical acceleration. However, nothing excludes considering another calculation model, such as a calculation model of the longitudinal acceleration of car 20.

Nothing excludes either considering the use of several calculation models, such as for example those of vertical and longitudinal accelerations (and possibly at different locations like the driver and the passengers), within the same closed control loop. For this purpose, an intermediate comfort index may be determined, following technical considerations similar to those described above, for each predicted signal obtained with a calculation model. Then, a general comfort index can be determined on the basis of the intermediate comfort indices (e.g. by addition, concatenation, Boolean operations, etc.), the comfort criterion therefore consisting in checking whether said general comfort index is within a given range.

**Claims**

1. A method for determining, for a motor vehicle (20) of a predefined type, a calculation model of a physical quantity Q representative of a state of the vehicle in operation, and determining a comfort index within said vehicle in operation being determinable based on at least the quantity Q predicted by said calculation model, said method being performed by a processing system (10) comprising acquisition means (11) and a processing device (12), and comprising the steps of:

   - acquiring (E10), by the acquisition means and on a motor test vehicle in operation corresponding to said predefined type, signals including a measurement signal of said quantity Q and other signals of physical quantities representative of a state of the vehicle in operation and distinct from Q,
   - obtaining (E20), by the processing device, said acquired signals,
   - learning in a supervised manner (E30), by the processing device and based on the acquired signals, the calculation model of the quantity Q, the physical quantities respectively associated with said other signals being considered as explanatory variables of said calculation model;

   said method being **characterized in that** said supervised learning step (E30) comprises:

   - a stationary wavelet transform (E30_1) of each of said other signals such that each of said other signals is decomposed into a plurality of frequency signals,
   - the performing (E30_2) of a gradient boosting regression algorithm based on said frequency signals and said measurement signal.

2. The method according to claim 1, wherein the supervised learning step (E30) comprises a determination of local extrema of said measurement signal whose respective values are greater, in absolute value, than a given threshold, the calculation model being learned based on said values and on said other signals.

3. The method according to claim 1 or 2, wherein the physical quantity Q is a vertical acceleration or a longitudinal acceleration of the vehicle in operation.

4. A method for controlling the operation of a motor vehicle (20), said method comprising a step of obtaining (F10) at least one calculation model previously determined for said vehicle according to any one of claims 1 to 3, said control method also comprising, when the vehicle is in operation, a step of performing (F20) a control loop for regulating comfort within said vehicle, and comprising:

   - a determination (F20_1), by means of said at least one calculation model and for at least one instant of time, of a value of the physical quantity Q associated with said at least one calculation model,
   - a determination (F20_2) of an index of comfort within said vehicle based on said at least one value,
   - an evaluation (F20_3) of a criterion of comfort within said vehicle, said criterion of comfort consisting in verifying whether the comfort index is within a given range,
   and, if said comfort criterion is not met,
   - an automatic speed adjustment of the vehicle or an automatic modification of at least one parameter of an active suspension system equipping the vehicle (F20_4), so that the comfort criterion is met.

5. The method according to claim 4, wherein a plurality of values of the quantity Q are determined so as to form a signal referred to as "calculated signal", the determination (F20_2) of the comfort index comprising:

   - a determination of the root mean square value of said calculated signal, and/or
   - a determination of the number of local extrema of said calculated signal whose respective values are greater, in absolute value, than a given threshold.

6. The method according to claim 4 or 5, wherein the step of performing the control regulation loop (F20) also comprises, when the comfort criterion is met for a given period, an automatic speed increase of the vehicle or another automatic modification of at least one parameter of the active suspension system so that the comfort criterion remains satisfied after said increase or said other modification.

7. The method according to any one of claims 4 to 6, wherein two calculation models are considered, a first model predicting a vertical acceleration of the vehicle, and a second model predicting a longitudinal acceleration of the vehicle.

8. A computer program including instructions for executing the steps of obtaining and supervised learning of a method according to any one of claims 1 to 7 when said program is executed by a computer.

9. A recording medium readable by a computer and having recorded thereon a computer program according to claim 8.

10. A processing system (10) for determining, for a motor vehicle (20) of a predefined type, a calculation model of a physical quantity Q representative of a state of the vehicle in operation, and determining a comfort index within said vehicle in operation being determinable based on at least the quantity Q predicted by said calculation model, said processing system comprising:

- acquisition means (11) configured to acquire, on a motor test vehicle in operation corresponding to said predefined type, signals including a measurement signal of said quantity Q and other signals of physical quantities representative of a state of the vehicle in operation and distinct from Q, said other signals being provided by a network of control units equipping said test vehicle,
- a processing device (12) comprising:

• an obtaining module (MOD_OBT_12) configured to obtain said acquired signals,
• a learning module (MOD_LEARN) configure to learn in a supervised manner, based on the acquired signals, the calculation model of the quantity Q for which the physical quantities respectively associated with said other signals are considered as explanatory variables,

said processing system being **characterized in that**

the supervised learning comprises:

- a stationary wavelet transform of each of said other signals such that each of said other signals is decomposed into a plurality of frequency signals,
- the performing of a gradient boosting regression algorithm based on said frequency signals and said measurement signal.

11. A processing system (30) for controlling the operation of a motor vehicle (20), said processing system comprising an obtaining module (MOD_OBT_30) configured to obtain at least one calculation model previously determined for said vehicle according to any one of claims 1 to 3, said processing system also comprising a control loop for regulating comfort within said vehicle when the vehicle is in operation, said control loop comprising:

- a first determination module (MOD_DET1) configured to determine, by means of said at least one calculation model and for at least one instant of time, a value of the physical quantity Q associated with said at least one calculation model,
- a second determination module (MOD_DET2) configured to determine an index of comfort within said vehicle based on said at least one value,
- an evaluation module (MOD_EV) configured to evaluate a criterion of comfort within said vehicle, said criterion of comfort consisting in verifying whether the comfort index is within a given range,
- a control module (MOD_CT_SP) configured to automatically adjust the speed of the vehicle or a control module (MOD_CT_SUS) configured to automatically modify at least one parameter of an active suspension system equipping the vehicle if said comfort criterion is not met, so that the comfort criterion is met.

12. Motor vehicle (20) comprising a processing system (30) according to claim 11.

**Patentansprüche**

1. Verfahren zum Bestimmen eines Berechnungsmodells einer physikalischen Größe Q, die für einen Zustand des sich in Betrieb befindlichen Fahrzeugs repräsentativ ist, für ein Kraftfahrzeug (20) eines vordefinierten Typs und zum Bestimmen eines Komfortindex innerhalb des sich in Betrieb befindlichen Fahrzeugs, der basierend auf mindestens der durch das Berechnungsmodell vorhergesagten Größe Q bestimmbar ist, wobei das Verfahren von einem Verarbeitungssystem (10) durchgeführt wird, das Erfassungsmittel (11) und eine Verarbeitungsvorrichtung (12) umfasst und die Schritte umfasst des:

- Erfassens (E10) von Signalen, die ein Messsignal der Größe Q und andere Signale physikalischer Größen, die für einen Zustand des in Betrieb befindlichen Fahrzeugs repräsentativ sind und sich von Q unterscheiden, beinhalten, durch die Erfassungsmittel und an einem in Betrieb befindlichen Testkraftfahrzeug, das dem vordefinierten Typ entspricht,
- Erlangens (E20) der erfassten Signale durch die Verarbeitungsvorrichtung,
- Erlernens des Berechnungsmodells der Größe Q durch die Verarbeitungsvorrichtung und basierend auf den erfassten Signalen auf überwachte Weise (E30), wobei die jeweils den anderen Signalen zugeordneten physikalischen Größen als erklärende Variablen des Berechnungsmodells in Betracht gezogen werden, wobei das Verfahren **dadurch gekennzeichnet ist, dass** der Schritt des überwachten Lernens (E30) umfasst:

- eine stationäre Wavelet-Transformation (E30_1) jedes der anderen Signale, sodass jedes der anderen Signale in mehrere Frequenzsignale zerlegt wird,
- das Durchführen (E30_2) eines Gradienten-Boosting-Regressionsalgorithmus basierend auf den Frequenzsignalen und dem Messsignal.

2. Verfahren nach Anspruch 1, wobei der Schritt des überwachten Lernens (E30) eine Bestimmung lokaler Extrema des Messsignals umfasst, deren jeweilige Werte betragsmäßig größer als ein gegebener Schwellenwert sind, wobei das Berechnungsmodell basierend auf den Werten und auf den anderen Signalen erlernt wird.

3. Verfahren nach Anspruch 1 oder 2, wobei die physikalische Größe Q eine Vertikalbeschleunigung oder eine Längsbeschleunigung des in Betrieb befindlichen Fahrzeugs ist.

4. Verfahren zum Steuern des Betriebs eines Kraftfahrzeugs (20), wobei das Verfahren einen Schritt des Erlangens (F10) mindestens eines Berechnungsmodells umfasst, das zuvor für das Fahrzeug gemäß einem der Ansprüche 1 bis 3 bestimmt wurde, wobei das Steuerungsverfahren außerdem einen Schritt des Durchführens (F20) eines Regelkreises zum Regulieren des Komforts innerhalb des Fahrzeugs umfasst, wenn das Fahrzeug in Betrieb ist, und umfassend:

- eine Bestimmung (F20_1) eines Wertes der physikalischen Größe Q, die dem mindestens einen Berechnungsmodell zugeordnet ist, mittels des mindestens einen Berechnungsmodells und für mindestens einen Zeitpunkt,
- eine Bestimmung (F20_2) eines Komfortindex innerhalb des Fahrzeugs basierend auf dem mindestens einen Wert,
- eine Bewertung (F20_3) eines Komfortkriteriums innerhalb des Fahrzeugs, wobei das Komfortkriterium darin besteht, zu überprüfen, ob der Komfortindex innerhalb eines bestimmten Bereichs liegt,
und wenn das Komfortkriterium nicht erfüllt ist,
- eine automatische Geschwindigkeitsanpassung des Fahrzeugs oder eine automatische Modifizierung mindestens eines Parameters eines aktiven Federungssystems (F20_4), mit dem das Fahrzeug ausgestattet ist, so dass das Komfortkriterium erfüllt ist.

5. Verfahren nach Anspruch 4, wobei mehrere Werte der Größe Q bestimmt werden, um ein als "berechnetes Signal" bezeichnetes Signal zu bilden, wobei die Bestimmung (F20_2) des Komfortindex umfasst:

- eine Bestimmung des quadratischen Mittelwerts des berechneten Signals und/oder
- eine Bestimmung der Anzahl lokaler Extrema des berechneten Signals, deren jeweilige Werte betragsmäßig größer als ein gegebener Schwellenwert sind.

6. Verfahren nach Anspruch 4 oder 5, wobei der Schritt des Durchführens des Regulierungsregelkreises (F20) auch eine automatische Geschwindigkeitserhöhung des Fahrzeugs oder eine andere automatische Modifizierung mindestens eines Parameters des aktiven Federungssystems umfasst, wenn das Komfortkriterium für einen bestimmten Zeitraum erfüllt ist, sodass das Komfortkriterium nach der Erhöhung oder der anderen Modifizierung weiterhin erfüllt bleibt.

7. Verfahren nach einem der Ansprüche 4 bis 6, wobei zwei Berechnungsmodelle in Betracht gezogen werden, wobei ein erstes Modell eine Vertikalbeschleunigung des Fahrzeugs vorhersagt und ein zweites Modell eine Längsbeschleunigung des Fahrzeugs vorhersagt.

8. Computerprogramm, das Anweisungen zum Ausführen der Schritte zum Erlangen und überwachten Lernen eines Verfahrens nach einem der Ansprüche 1 bis 7 beinhaltet, wobei das Programm von einem Computer ausgeführt wird.

9. Aufzeichnungsmedium, das von einem Computer lesbar ist und auf dem ein Computerprogramm nach Anspruch 8 aufgezeichnet ist.

10. Verarbeitungssystem (10) zum Bestimmen eines Berechnungsmodells einer physikalischen Größe Q, die für einen Zustand des in Betrieb befindlichen Fahrzeugs repräsentativ ist, für ein Kraftfahrzeug (20) eines vordefinierten Typs, und zum Bestimmen eines Komfortindex innerhalb des in Betrieb befindlichen Fahrzeugs, der basierend auf mindestens der durch das Berechnungsmodell vorhergesagten Größe Q bestimmbar ist, wobei das Verarbeitungssystem umfasst:

 - Erfassungsmittel (11), die dazu ausgestaltet sind, Signale, die ein Messsignal der Größe Q und andere Signale physikalischer Größen, die für einen Zustand des in Betrieb befindlichen Fahrzeugs repräsentativ sind und sich von Q unterscheiden, beinhalten, an einem in Betrieb befindlichen Testkraftfahrzeug, das dem vordefinierten Typ entspricht, zu erfassen, wobei die anderen Signale von einem Netzwerk von Steuereinheiten bereitgestellt werden, mit denen das Testfahrzeug ausgestattet ist,
 - eine Verarbeitungsvorrichtung (12), umfassend:

  • ein Erlangungsmodul (MOD_OBT_12), das dazu ausgestaltet ist, die erfassten Signale zu erlangen,
  • ein Lernmodul (MOD_LEARN), das dazu ausgestaltet ist, das Berechnungsmodell der Größe Q, für das die jeweils den anderen Signalen zugeordneten physikalischen Größen als erklärende Variablen in Betracht gezogen werden, basierend auf den erfassten Signalen auf überwachte Weise zu erlernen,

 wobei das Verarbeitungssystem **dadurch gekennzeichnet ist, dass** das überwachte Lernen umfasst:

  - eine stationäre Wavelet-Transformation jedes der anderen Signale, sodass jedes der anderen Signale in mehrere Frequenzsignale zerlegt wird,
  - das Durchführen eines Gradienten-Boosting-Regressionsalgorithmus basierend auf den Frequenzsignalen und dem Messsignal.

11. Verarbeitungssystem (30) zum Steuern des Betriebs eines Kraftfahrzeugs (20), wobei das Verarbeitungssystem ein Erlangungsmodul (MOD_OBT_30) umfasst, das dazu ausgestaltet ist, mindestens ein zuvor für das Fahrzeug bestimmtes Berechnungsmodell gemäß einem der Ansprüche 1 bis 3 zu erlangen, wobei das Verarbeitungssystem außerdem einen Regelkreis zum Regulieren des Komforts innerhalb des Fahrzeugs umfasst, wenn das Fahrzeug in Betrieb ist, wobei der Regelkreis umfasst:

 - ein erstes Bestimmungsmodul (MOD_DET1), das dazu ausgestaltet ist, einen Wert der physikalischen Größe Q, die dem mindestens einen Berechnungsmodell zugeordnet ist, mittels des mindestens einen Berechnungsmodells und für mindestens einen Zeitpunkt zu bestimmen,
 - ein zweites Bestimmungsmodul (MOD_DET2), das dazu ausgestaltet ist, einen Komfortindex innerhalb des Fahrzeugs basierend auf dem mindestens einen Wert zu bestimmen,
 - ein Bewertungsmodul (MOD_EV), das dazu ausgestaltet ist, ein Komfortkriterium innerhalb des Fahrzeugs zu bewerten, wobei das Komfortkriterium darin besteht, zu überprüfen, ob der Komfortindex innerhalb eines bestimmten Bereichs liegt,
 - ein Steuermodul (MOD_CT_SP), das dazu ausgestaltet ist, die Geschwindigkeit des Fahrzeugs automatisch anzupassen, oder ein Steuermodul (MOD_CT_SUS), das dazu ausgestaltet ist, wenn das Komfortkriterium nicht erfüllt ist, automatisch mindestens einen Parameter eines aktiven Federungssystems zu modifizieren, mit dem das Fahrzeug ausgestattet ist, so dass das Komfortkriterium erfüllt ist.

12. Kraftfahrzeug (20), umfassend ein Verarbeitungssystem (30) nach Anspruch 11.

## Revendications

1. Procédé destiné à déterminer, pour un véhicule à moteur (20) d'un type prédéfini, un modèle de calcul d'une quantité physique Q représentative d'un état du véhicule en fonctionnement, et déterminer un indice de confort dans ledit véhicule en fonctionnement qui peut être déterminé sur la base de au moins la quantité Q prédite par ledit modèle de calcul, ledit procédé étant mis en oeuvre par un système de traitement (10) comprenant des moyens d'acquisition (11) et un dispositif de traitement (12), et comprenant les étapes de :

 - acquisition (E10), par les moyens d'acquisition et sur un véhicule à moteur d'essai en fonctionnement correspondant au dit type prédéfini, de signaux comprenant un signal de mesure de ladite quantité Q et d'autres signaux de quantités physiques représentatives d'un état du véhicule en fonctionnement et distinctes de Q,
 - obtention (E20), par le dispositif de traitement, desdits signaux acquis,

- apprentissage d'une manière supervisée (E30), par le dispositif de traitement et sur la base des signaux acquis, du modèle de calcul de la quantité Q, les quantités physiques respectivement associées aux dits autres signaux étant considérées comme des variables explicatives dudit modèle de calcul ;

ledit procédé étant **caractérisé en ce que** ladite étape d'apprentissage supervisé (E30) comprend :

- une transformée en ondelettes stationnaires (E30_1) de chacun desdits autres signaux de telle sorte que chacun desdits autres signaux est décomposé en une pluralité de signaux de fréquence,
- la réalisation (E30_2) d'un algorithme de régression d'amplification de gradient sur la base desdits signaux de fréquence et dudit signal de mesure.

2. Procédé selon la revendication 1, selon lequel l'étape d'apprentissage supervisé (E30) comprend une détermination d'extrêmes locaux dudit signal de mesure dont des valeurs respectives sont plus grandes, en valeur absolue, qu'un seuil donné, le modèle de calcul étant appris sur la base desdites valeurs et desdits autres signaux.

3. Procédé selon la revendication 1 ou 2, selon lequel la quantité physique Q est une accélération verticale ou une accélération longitudinale du véhicule en fonctionnement.

4. Procédé destiné à commander le fonctionnement d'un véhicule à moteur (20), ledit procédé comprenant une étape d'obtention (F10) de au moins un modèle de calcul précédemment déterminé pour ledit véhicule selon l'une quelconque des revendications 1 à 3, ledit procédé de commande comprenant également, quand le véhicule est en fonctionnement, une étape de réalisation (F20) d'une boucle de commande pour réguler le confort dans ledit véhicule, et comprenant :

- une détermination (F20_1), au moyen dudit au moins un modèle de calcul et pendant au moins un instant, d'une valeur de la quantité physique Q associée au dit au moins un modèle de calcul,
- une détermination (F20_2) d'un indice de confort dans ledit véhicule sur la base de ladite au moins une valeur,
- une évaluation (F20_3) d'un critère de confort dans ledit véhicule, ledit critère de confort consistant à vérifier si l'indice de confort est dans une plage donnée,
et, si ledit critère de confort n'est pas atteint,
- un ajustement automatique de vitesse du véhicule ou une modification automatique de au moins un paramètre d'un système de suspension active équipant le véhicule (F20_4), de telle sorte que le critère de confort est atteint.

5. Procédé selon la revendication 4, selon lequel une pluralité de valeurs de la quantité Q est déterminée de façon à former un signal désigné comme « signal calculé », la détermination (F20_2) de l'indice de confort comprenant :

- une détermination de la valeur quadratique moyenne dudit signal calculé, et/ou
- une détermination du nombre d'extrêmes locaux dudit signal calculé dont des valeurs respectives sont plus grandes, en valeur absolue, qu'un seuil donné.

6. Procédé selon la revendication 4 ou 5, selon lequel l'étape de réalisation de la boucle de régulation de commande (F20) comprend également, quand le critère de confort est atteint pour une période donnée, une augmentation automatique de vitesse du véhicule ou une autre modification automatique de au moins un paramètre du système de suspension active de telle sorte que le critère de confort demeure satisfait après ladite augmentation ou ladite autre modification.

7. Procédé selon l'une quelconque des revendications 4 à 6, selon lequel deux modèles de calcul sont considérés, un premier modèle qui prédit une accélération verticale du véhicule, et un deuxième modèle qui prédit une accélération longitudinale du véhicule.

8. Programme informatique comprenant des instructions pour exécuter les étapes d'obtention et d'apprentissage supervisé d'un procédé selon l'une quelconque des revendications 1 à 7 quand ledit programme est exécuté par un ordinateur.

9. Support d'enregistrement lisible par un ordinateur et ayant enregistré dessus un programme informatique selon la revendication 8.

10. Système de traitement (10) destiné à déterminer, pour un véhicule à moteur (20) d'un type prédéfini, un modèle de calcul d'une quantité physique Q représentative d'un état du véhicule en fonctionnement, et déterminer un indice de confort dans ledit véhicule en fonctionnement qui peut être déterminé sur la base de au moins la quantité Q prédite par ledit modèle de calcul, ledit système de traitement comprenant :

- des moyens d'acquisition (11) configurés pour acquérir, sur un véhicule à moteur d'essai en fonctionnement correspondant au dit type prédéfini, des signaux comprenant un signal de mesure de ladite quantité Q et d'autres signaux de quantités physiques représentatives d'un état du véhicule en fonctionnement et distinctes de Q, lesdits autres signaux étant fournis par un réseau d'unités de commande équipant ledit véhicule d'essai,
- un dispositif de traitement (12) comprenant :

> • un module d'obtention (MOD_OBT_12) configuré pour obtenir lesdits signaux acquis,
> • un module d'apprentissage (MOD_LEARN) configuré pour l'apprentissage d'une manière supervisée, sur la base des signaux acquis, du modèle de calcul de la quantité Q pour lequel les quantités physiques respectivement associées aux dits autres signaux sont considérées comme des variables explicatives,

ledit système de traitement étant **caractérisé en ce que** l'apprentissage supervisé comprend :

> - une transformée en ondelettes stationnaires de chacun desdits autres signaux de telle sorte que chacun desdits autres signaux est décomposé en une pluralité de signaux de fréquence,
> - la réalisation d'un algorithme de régression d'amplification de gradient sur la base desdits signaux de fréquence et dudit signal de mesure.

11. Système de traitement (30) destiné à commander le fonctionnement d'un véhicule à moteur (20), ledit système de traitement comprenant un module d'obtention (MOD_OBT_30) configuré pour obtenir au moins un modèle de calcul précédemment déterminé pour ledit véhicule selon l'une quelconque des revendications 1 à 3, ledit système de traitement comprenant également une boucle de commande pour réguler le confort dans ledit véhicule quand le véhicule est en fonctionnement, ladite boucle de commande comprenant :

> - un premier module de détermination (MOD_DET1) configuré pour déterminer, au moyen dudit au moins un modèle de calcul et pendant au moins un instant, une valeur de la quantité physique Q associée audit au moins un modèle de calcul,
> - un deuxième module de détermination (MOD_DET2) configuré pour déterminer un indice de confort dans ledit véhicule sur la base de ladite au moins une valeur,
> - un module d'évaluation (MOD_EV) configuré pour évaluer un critère de confort dans ledit véhicule, ledit critère de confort consistant à vérifier si l'indice de confort est dans une plage donnée,
- un module de commande (MOD_CT_SP) configuré pour ajuster automatiquement la vitesse du véhicule ou un module de commande (MOD_CT_SUS) configuré pour modifier automatiquement au moins un paramètre d'un système de suspension active équipant le véhicule si ledit critère de confort n'est pas atteint, de telle sorte que le critère de confort est atteint.

12. Véhicule à moteur (20) comprenant un système de traitement (30) selon la revendication 11.

**20**

**12**

**11**

**MOD_OBT_12**

**MOD_LEARN**

**10**

# FIG.1

**12**

**3_12**

**5_12**

**1_12**

PROG_12

**4_12**

**2_12**

# FIG.2

Acquisition of a measurement
signal and CAN network signals $\sim$E10

Obtaining of the acquired
signals $\sim$E20

Supervised learning

Stationary wavelet transform
of the CAN network signals $\sim$E30_1

$\sim$E30

Gradient boosting
regression algorithm $\sim$E30_2

## FIG.3

20

MOD_OBT_30

MOD_DET1

MOD_DET2

30

MOD_EV

MOD_CT_SP/
MOD_CT_SUS

## FIG.4

**30**

```
┌─────────────────────────────────────────┐
│                              ┌─────────┐ │
│                              │  3_30   │ │
│                              ├─────────┤ │
│  ┌──────┐     ┌──────┐      │ PROG_30 │ │
│  │ 5_30 │     │ 1_30 │      └────┬────┘ │
│  └──┬───┘     └──┬───┘           │      │
│     │            │               │      │
│     └─────┬──────┴───────┬───────┘      │
│        ┌──┴───┐       ┌──┴───┐          │
│        │ 4_30 │       │ 2_30 │          │
│        └──────┘       └──────┘          │
└─────────────────────────────────────────┘
```

# FIG.5

```
         ┌────────────────────────┐
         │ Obtention of the        │
         │ predictive model        │──── F10
         └───────────┬────────────┘
┌ ─ ─ ─ ─ ─ ─ ─ ─ ─ ─│─ ─ ─ ─ ─ ─ ─ ─ ─ ─ ─ ┐
          ▼          ▼
│        ┌────────────────────────┐          │
  ┌──────│ Determination of        │──── F20_1
│ │      │ the predictive signal   │          │
  │      └───────────┬────────────┘
│ │                  ▼                        │
  │      ┌────────────────────────┐
│ │      │ Determination of an     │──── F20_2  │
  │      │ index of comfort        │
│ │      └───────────┬────────────┘          │──── F20
  │                  ▼
│ │      ┌────────────────────────┐          │
  │      │ Evaluation of a comfort │──── F20_3
│ │      │ criterion               │          │
  │      └──────┬──────────┬──────┘
│ │          NOK│          │OK                │
  │ F20_4        ▼          ▼        F20_5
│ │   ┌──────────────────┐ ┌──────────────────┐│
  └───│ Automatic speed  │ │ Maintaining of   │
│     │ reduction        │ │ the original     ││
      └──────────────────┘ │ speed            │
│                          └──────────────────┘│
└ ─ ─ ─ ─ ─ ─ ─ ─ ─ ─ ─ ─ ─ ─ ─ ─ ─ ─ ─ ─ ─ ─ ┘
```

# FIG.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019206032 A1

- GB 2569750 A

**Non-patent literature cited in the description**

- **ARZOO MIGLANI et al.** *VEHICULAR COMMUNICA-TIONS,* 31 December 2019, vol. 20